# EUROPÄISCHE PATENTSCHRIFT

(11) **EP 2 520 892 B1**
(45) Veröffentlichungstag und Bekanntmachung des Hinweises auf die Patenterteilung: **18.03.2015**
(21) Anmeldenummer: 12163268.1
(22) Anmeldetag: 20.11.2003
(51) Int. Cl.: F28F 1/08, F28F 1/42, G01D 11/24, G01F 23/296

(54) **Messgerät**
Measuring apparatus
Appareil de mesure

(30) Priorität: 23.11.2002 DE 10254720
(43) Veröffentlichungstag der Anmeldung: 07.11.2012
(62) Teilanmeldung aus: 03775375.3
(73) Patentinhaber: Endress + Hauser GmbH + Co. KG, 79689 Maulburg (DE)
(72) Erfinder: Hintner, Gottfried, 79650 Schopfheim (DE); Müller, Alexander, 79361 Sasbach-Jechtingen (DE); Pfeiffer, Helmut, 79585 Steinen (DE)
(74) Vertreter: Andres, Angelika Maria

(56) Entgegenhaltungen:
- EP-A1- 0 547 363
- EP-A2- 0 114 640
- DE-U1- 8 216 323
- US-A- 5 709 029

## Beschreibung

Die Erfindung betrifft ein Messgerät mit einem Gehäuse, in dem elektronische Bauteile angeordnet sind.

Messgeräte werden in nahezu allen Industriezweigen zur Erfassung physikalischer Größen, z.B. von Füllständen oder Drücken, eingesetzt.

Messgeräte weisen üblicherweise eine Vorrichtung zur Erfassung der physikalischen Größe auf, die die physikalische Größe in eine elektrische Größe umwandelt und diese für eine Auswertung, Verarbeitung und/oder Anzeige zur Verfügung stellt. Hierzu sind je nach Messgerät mehr oder minder aufwendige elektronische Schaltungen im Messgerät vorgesehen, die elektronische Bauteile aufweisen.

Ein Beispiel für ein Messgerät sind Füllstandsgrenzschalter, die das Erreichen eines vorbestimmten Füllstandes detektieren und z.B. als Überfüllsicherung oder als Pumpenleerlaufschutz eingesetzt werden.

Heute sind z.B. Füllstandsgrenzschalter auf dem Markt, die ein topförmiges Gehäuse aufweisen, dessen Boden eine Membran bildet. Die Membran wird im Betrieb durch mindestens ein im Inneren des Gehäuses angeordnetes piezoelektrisches Element in Schwingungen versetzt. Auf der Membran sind z.B. in den Behälter hineinragende Schwingstäbe angeformt, die im Betrieb Schwingungen parallel zu deren Längsachse ausführen. Das aus Membran und Schwingstäben aufgebaute Schwingungsgebilde wird vorzugsweise zu Resonanzschwingungen angeregt. Die Resonanzfrequenz des Schwingungsgebildes hängt davon ab, ob die Schwingstäbe vom Füllgut bedeckt sind oder nicht. Anhand der Resonanzfrequenz lässt sich feststellen ob die Schwingstäbe vom Füllgut bedeckt sind oder nicht. Sind die Schwingstäbe vom Füllgut bedeckt, so ist ein vorbestimmter Füllstand erreicht. Der vorbestimmte Füllstand ist durch eine Einbauhöhe des Füllstandsgrenzschalters im Behälter vorgegeben.

Messgeräte werden an einem Messort, z.B. auf einem Behälter, montiert. Dabei können am Messort unter Umständen relativ hohe Temperaturen auftreten. Temperaturen in geschlossenen Behältern erreichen in vielen Industriezweigen z.B. Temperaturen von bis zu 150°C. Außerdem können in der Umgebung des Messorts verhältnismäßig hohe Temperaturen, z.B. 50°C, auftreten. Elektronische Bauteile sind jedoch sehr temperaturempfindlich. In der Regel können handelsübliche elektronische Bauteile nur bei Temperaturen bis maximal 85°C eingesetzt werden.

Je nach Art der Anwendung und der Einbausituation am Behälter müssen die Gehäuse sehr robust ausgebildet sein. In vielen Anwendungen wird gefordert, dass das Gehäuse einer Last von maximal 1000 N quer zu einer Längsachse des Gehäuses standhalten muss, ohne dass es zu einem Bruch des Gehäuses kommt.

Metallische Gehäuse sind sehr robust und lassen sich außerdem gut reinigen. Entsprechend werden in der industriellen Messtechnik bevorzugt metallische Gehäuse für Messgeräte eingesetzt.

Metalle sind jedoch gute Wärmeleiter. Eine gute Wärmeleitung durch das Gehäuse bringt den Nachteil mit sich, dass in dem Gehäuse befindliche elektronische Bauteile eine sehr starke Erwärmung erfahren, wenn am Messort hohe Temperaturen vorherrschen.

DE 8216 323 U1 beschreibt eine Sonde zur Messung eines Füllstands eines heißen Füllguts in einem Behälter. Die Sonde umfasst eine Sondenelektrode und ein Befestigungsteil. An dem Befestigungsteil ist ein rohrförmiger Kühlkörper befestigt, der den Sondenkopf trägt und mit Kühlrippen versehen ist.

US 5 709 029 A beschreibt ein Wärmetauschrohr mit Wellen, die äußere schraubenförmige Rippen aufweisen, die sich um und in Längsrichtung des Wärmetauschrohrs erstrecken. Jeder Rippe ist eine Ausnehmung zugeordnet, wobei sich die Ausnehmung einwärts in das Innere der Röhre erstreckt und eine innere Rippe bildet. Die wendelgewellte Form des Wärmetauschrohres dient zum Wärmetausch zwischen einem Fluid im Inneren des Wärmetauschrohres mit einem Fluid außerhalb des Wärmetauschrohres.

EP 0 114 640 A2 beschreibt ein Wärmetauschrohr mit integrierten externen und internen schraubenförmigen Rippen, wobei die Oberfläche der Rippen und eine Innenfläche des Wärmetauschrohres optimiert wurden, um einen maximalen Wärmeaustausch zwischen dem Inneren und dem Äußeren des Wärmetauschrohres zu erreichen.

EP 0 547 363 A1 beschreibt ein Wärmeaustauschrohr mit auf der Außen- und Innenseite schraubenförmig umlaufenden, integralen Rippen zur Kühlung von zähen Fluiden, wobei das zu kühlende Fluid durch das Rohr strömt und dessen Außenseite von Luft gekühlt ist.

Es ist eine Aufgabe der Erfindung ein Messgerät anzugeben, das auch bei hohen Temperaturen eingesetzt werden kann.

Hierzu besteht die Erfindung in einem Messgerät mit
- einem Gehäuse,
   -- das einen ersten Abschnitt aufweist,
      --- an dem eine Vorrichtung zur Befestigung des Gehäuses an einem Messort vorgesehen ist,
   -- das einen zweiten Abschnitt aufweist,
      --- der an den ersten Abschnitt angrenzt, und
   -- das einen dritten Abschnitt aufweist,
      --- der an den zweiten Abschnitt angrenzt und
      --- in dem sich elektronische Bauteile befinden,
- bei dem der zweite Abschnitt so ausgebildet ist, dass
   der zweite Abschnitt bei Vorliegen eines Temperaturunterschiedes zwischen einer Umgebung des ersten Abschnitts und einer
   Umgebung des dritten Abschnitts auf Grund einer Erwärmung des ersten Abschnitts einen Schutz des dritten Abschnitts vor Erwärmung bewirkt,
wobei in der Wand des zweiten Abschnitts mehrere umlaufende Nuten vorgesehen sind, welche die für die Wärmeleitung parallel zur Längsachse des Gehäuses zur Verfügung stehende Querschnittfläche reduzieren, wobei die Nuten abwechselnd auf einer Innenseite der Wand und einer Außenseite der Wand angeordnet sind.

Die Erfindung und weitere Vorteile werden nun anhand der Figuren der Zeichnung, in denen sieben Ausführungsbeispiele dargestellt sind, näher erläutert; gleiche Elemente sind in den Figuren mit gleichen Bezugszeichen versehen.
- Fig. 1: zeigt einen Schnitt durch ein Messgerät mit einer umlaufenden Nut; und
- Fig. 2: zeigt eine teilweise geschnittene Ansicht eines zweiten Abschnitts mit alternierend übereinander angeordneten innenliegenden und außenliegende Nuten.

Bei dem dargestellten Messgerät handelt es sich um einen Füllstandsgrenzschalter für die Feststellung und/oder Überwachung eines vorbestimmten Füllstands in einem Behälter, wie er in der Mess- und Regeltechnik eingesetzt wird.

Das Messgerät weist ein Gehäuse 1 aus einem Metall, z.B. einem Edelstahl, auf, das einen ersten, einen zweiten und einen dritten Abschnitt 3, 5, 7 umfasst.

Der erste Abschnitt 3 hat die Form eines von einer Membran 9 endseitig abgeschlossenen Zylinders.

An dem Zylinder ist eine Vorrichtung 11 zur Befestigung des Gehäuses 1 an einem Messort vorgesehen. Die Vorrichtung 11 ist ein Außengewinde, das an den ersten Abschnitt 3 angeformt ist. Das Gehäuse 1 ist mittels des Außengewindes in ein Gegengewinde am Messort eingeschraubt. Dabei ist das Gehäuse 1 in eine Öffnung 13 eines Behälters eingeschraubt. Andere Vorrichtungen zur Befestigung, z.B. Befestigungsflansche, sind ebenfalls einsetzbar.
An der Membran 9 sind zwei voneinander beabstandete in den Behälter hineinragende Schwingstäbe 15 angeformt, die im Betrieb gegenphasige Schwingungen senkrecht zu deren Längsachse ausführen. Auf einer ins Innere des Gehäuses 1 weisenden Oberfläche der Membran 9 ist hierzu ein piezoelektrisches Element 17 angebracht, z.B. aufgeklebt, durch das die Membran 9 in Biegeschwingungen versetzbar ist.

Im Betrieb wird das aus Membran 9 und Schwingstäben 15 bestehende Schwingungsgebilde in Resonanzschwingungen versetzt und es wird dessen Resonanzfrequenz erfasst. Liegt die Resonanzfrequenz unterhalb eines vorgegebenen Schwellwertes, so sind die Schwingstäbe von einem Füllgut im Behälter bedeckt, liegt sie oberhalb dieses Schwellwerts, liegen die Schwingstäbe frei.

An einer membran-abgewandten Seite des ersten Abschnitts 3 grenzt der zweite Abschnitt 5 des Gehäuses 1 an. Der zweite Abschnitt 5 ist ebenfalls im wesentlichen zylindrisch.

Der zweite Abschnitt 5 ist so ausgebildet, dass bei vorliegen eines Temperaturunterschiedes zwischen einer Umgebung des ersten Abschnitt 3 und einer Umgebung des dritten Abschnitts 7 ein geringer Wärmestrom parallel zu einer Längsachse L des Gehäuses 1 durch den zweiten Abschnitt 5 fließt. Hierdurch wird eine Wärmeübertragung vom ersten in den dritten Abschnitt 3, 7 reduziert.

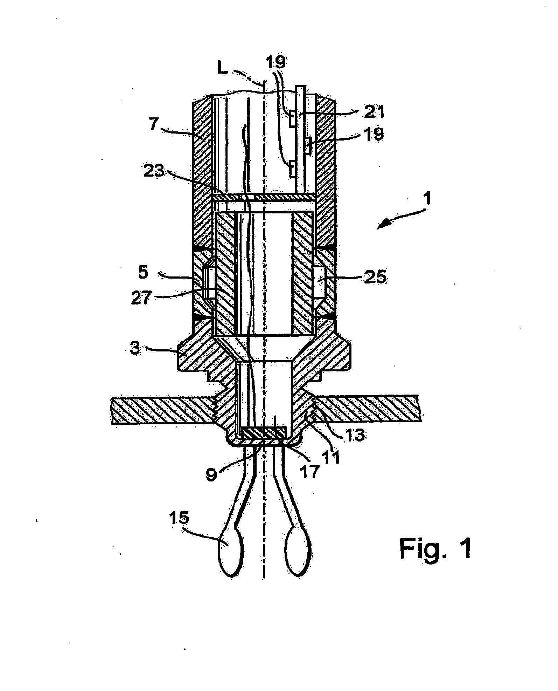

Der dritte Abschnitt 7 ist ebenfalls zylindrisch und grenzt an eine vom ersten Abschnitt 3 abgewandte Seite des zweiten Abschnitts 5 an. In dem dritten Abschnitt 7 befinden sich elektronische Bauteile 19. Diese sind auf einer Leiterplatte 21 angeordnet, die mittels einer in Fig. 1 lediglich schematisch dargestellten Halterung 23 in dem dritten Abschnitt 7 befestigt ist.

Der zweite Abschnitt 5 bewirkt einen Schutz des dritten Abschnitts 7, bzw. der darin befindlichen Bauteile 19 vor Erwärmung. Indem der zweite Abschnitt 5 so ausgebildet ist, dass bei einem Temperaturunterschied zwischen der Umgebung des ersten Abschnitt 3 und der Umgebung des dritten Abschnitts 7 nur ein geringer Wärmestrom parallel zu einer Längsachse L des Gehäuses 1 durch den zweiten Abschnitt fließt eine Erwärmung des am Messort unter Umständen sehr hohen Temperaturen ausgesetzten ersten Abschnitts 3 eine deutlich niedrigere Erwärmung des dritten Abschnitts 7, bzw. der darin befindlichen elektronischen Bauteile 19, als bei herkömmlichen Messgeräten.

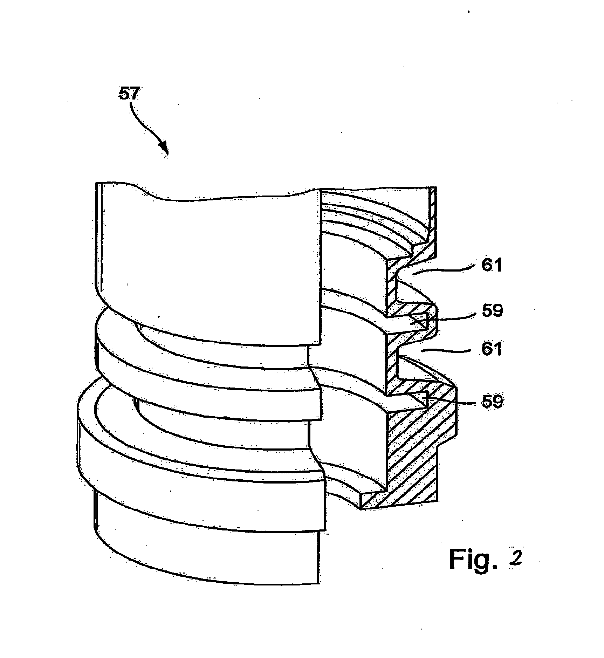

Ein geringerer Wärmestrom parallel zur Längsachse L ist physikalisch auf zwei verschiedenen Wegen erzielbar. Zum einen kann ein durch ein Temperaturgefälle zwischen dem ersten Abschnitt 3 und der Umgebung des dritten Abschnitts 7 bedingter Wärmemengenfluss reduziert werden, indem eine für diesen Wärmemengenfluss zur Verfügung stehende Querschnittsfläche reduziert wird. Zum anderen kann eine durch Konvektion vom zweiten Abschnitt 5 radial nach außen abgegebene Wärmemenge erhöht werden, indem eine hierfür zur Verfügung stehende Oberfläche erhöht wird. Beide Möglichkeiten sowie eine Kombination beider Möglichkeiten sind nachfolgend anhand der Figuren 1 und 2 näher erläutert.

Die für den Wärmemengenfluss zur Verfügung stehende Querschnittsfläche wird maßgeblich reduziert, indem eine Wand des zweiten Abschnitts 5 mindestens einen Bereich mit reduzierter Wanddicke aufweist. Die Querschnittsfläche ist proportional zur Wanddicke.

Bei dem in Fig. 1 dargestellten Messgerät ist in der Wand des zweiten Abschnitts 5 auf deren Innenseite eine ringförmig umlaufende Nut 25 vorgesehen. Je geringer die Wandstärke im Bereich der Nut 25 ist und je breiter die Nut 25 ist, umso geringer ist eine im dritten Bereich 7 auf die elektronischen Bauteile 19 einwirkende Temperatur.

Eine reduzierte Wandstärke und eine breite Nut 25 führen dazu, dass das Gehäuse 1 an mechanischer Stabilität verliert. Besonders kritisch sind hierbei Belastungen, die senkrecht zur Längsachse L auf das Gehäuse 1 einwirken.

Deshalb ist, wie in Fig. 1 dargestellt, im Inneren des zweiten Abschnitts 5 zur Erhöhung der mechanischen Festigkeit des Gehäuses 1 gegenüber Belastungen senkrecht zur Längsachse des Gehäuses 1 ein Stützkörper 27 aus einem Isolator angeordnet. Der Stützkörper 27 ist ein Hohlrohr, dessen Außengeometrie einer Innengeometrie des zweiten Abschnitts 5 angepasst ist. Bei einem zylindrischen zweiten Abschnitt 5 bedeutet dies, dass ein Außendurchmesser des Stützkörpers 27 vorzugsweise gleich einem Innendurchmesser des zweiten Abschnitts 5 ist.

Er besteht aus einem Isolator, weil Isolatoren eine im Vergleich zu Metallen geringe Wärmeleitfähigkeit aufweisen. Der erste Abschnitt 3 weist einen geringeren Innendurchmesser auf als der zweite Abschnitt 5. Zwischen dem ersten und dem zweiten Abschnitt 3, 5 besteht somit eine Absatzfläche, auf der der Stützkörper 27 aufliegt.

Fig. 2 zeigt ein Ausführungsbeispiel für einen erfindungsgemäßen zweiten Abschnitt 57. In der Wand des zweiten Abschnitts 57 dieses Ausführungsbeispiels sind mehrere umlaufende Nuten 59, 61 vorgesehen. Die Nuten 59, 61 sind parallel zueinander übereinander angeordnet, wobei die Nuten 59, 61 abwechselnd auf einer Innenseite der Wand und einer Außenseite der Wand angeordnet sind, d.h. neben einer auf der Innenseite der Wand liegenden Nut 59 befindet sich eine auf der Außenseite angeordnete Nut 61, auf die wiederum eine auf der Innenseite der Wand angeordnete Nut 59 folgt.

Durch die Nuten 59, 61 wird, genau wie bei dem in Fig. 1 dargestellten Messgerät. die für die Wärmeleitung parallel zur Längsachse L des H Gehäuses 1 zur Verfügung stehende Querschnittfläche reduziert.

Zusätzlich wird durch die alternierende Anordnung von innen und außen liegenden Nuten 59, 61 eine Oberfläche des Gehäuses 1, über die Wärme durch Konvektion radial nach außen abgeleitet wird, erhöht.

Bei dem erfindungsgemäßen Messgerätem kann der zweite Abschnitt 57 ein eigenständiges Bauteil sein, das z.B., wie in Fig. 1 dargestellt, durch Schweißungen mit dem ersten und dem dritten Abschnitt 3, 7 verbunden. Alternativ ist zweite Abschnitt 57 zusammen mit dem ersten und/oder dem zweiten Abschnitt 3, 7 als ein einziges Bauteil ausgebildet sein.

Die Bereiche mit reduzierte Wandstärke bzw. die Nuten können z.B. durch Drehen hergestellt werden.

Durch den zweiten Abschnitt 57 wird erreicht, dass selbst dann, wenn der erste Abschnitt 1 am Messort sehr hohen Temperaturen, z.B. 150 °C, ausgeset-zt ist, die elektronischen Bauteile 19 im dritten Abschnitt 7 vor einer Überhitzung geschützt sind. Ist der erste Abschnitt 1 einer Temperatur von 150 °C ausgesetzt, so genügt bereits eine Nut mit einer Breite von etwas mehr als einem Zentimeter, um zu gewährleisten, dass die elektronischen Bauteile 19 eine Temperatur von maximal 85°C erreichen. 85 °C wird von den meisten Bauteilherstellern als Temperaturobengrenze für den Einsatz von elektronischen Bauteilen angegeben.

Ein großer Vorteil der erfindungsgemäßen Messgeräte besteht darin, dass sie bei hohen Temperaturen einsetzbar sind und gleichzeitig hohen mechanischen Belastungen senkrecht zur Längsachse L des Gehäuses 1, z.B. Belastungen von 1000 N, standhalten können. Damit sind die Messgeräte sehr vielseitig einsetzbar.

## Patentansprüche

1. Messgerät mit
- einem Gehäuse (1),
-- das einen ersten Abschnitt (3) aufweist,
--- an dem eine Vorrichtung (11) zur Befestigung des Gehäuses (1) an einem Messort vorgesehen ist,
-- das einen zweiten Abschnitt (57) aufweist,
--- der an den ersten Abschnitt (3) angrenzt, und
-- das einen dritten Abschnitt (7) aufweist,
--- der an den zweiten Abschnitt (57) angrenzt und
--- in dem sich elektronische Bauteile (19) befinden,
- bei dem der zweite Abschnitt (57) so ausgebildet ist, dass der zweite Abschnitt (57) bei Vorliegen eines Temperaturunterschiedes zwischen einer Umgebung des ersten Abschnitts (3) und einer Umgebung des dritten Abschnitts (7) auf Grund einer Erwärmung des ersten Abschnitts (3) einen Schutz des dritten Abschnitts vor Erwärmung bewirkt,
**dadurch gekennzeichnet,**
**dass** in der Wand des zweiten Abschnitts (57) mehrere umlaufende Nuten (59, 61) vorgesehen sind, welche die für die Wärmeleitung parallel zur Längsachse (L) des Gehäuses (1) zur Verfügung stehende Querschnittfläche reduzieren, wobei die Nuten (59, 61) abwechselnd auf einer Innenseite der Wand und einer Außenseite der Wand angeordnet sind.

## Claims

1. Measuring device with
- a housing (1)
-- which has a first section (3),
--- on which is provided a unit (11) designed for securing the housing (1) at a measuring location,
-- which has a second section (57),
--- which adjoins the first section (3), and
-- which has a third section (7),
--- which adjoins the second section (57) and
--- in which electronic components (19) are located,
- wherein the second section (57) is designed in such a way that the second section protects the third section from heating up in the event of a difference in temperature between an environment of the first section (3) and an environment of the third section (7) caused by heating of the first section (3),
**characterized in that**
several circumferential grooves (59, 61) are provided in the wall of the second section (57), said grooves reducing the cross-sectional area available for thermal conduction parallel to the longitudinal axis (L) of the housing (1), wherein the grooves (59, 61) are arranged alternately on an inner side of the wall and an outer side of the wall.

## Revendications

1. Appareil de mesure avec
- un boîtier (1)
-- qui présente une première partie (3),
--- sur laquelle est prévue un dispositif (11) destiné à la fixation du boîtier (1) sur un emplacement de mesure,
-- qui présente une deuxième partie (57),
--- qui jouxte la première partie (3), et
-- qui présente une troisième partie (7),
--- qui jouxte la deuxième partie (57) et
--- dans laquelle se trouvent des composants électroniques (19),
- pour lequel la deuxième partie (57) est conçue de telle sorte à ce que la deuxième partie (57) assure, en présence d'une différence de température entre un environnement de la première partie (3) et d'un environnement de la troisième partie (7) due à un échauffement de la première partie (3), une protection contre l'échauffement de la troisième partie,
**caractérisé en ce**
**que** sont prévues dans la paroi de la deuxième partie (57) plusieurs rainures périphériques (59, 61), lesquelles réduisent la surface de section disponible pour la conduction thermique, parallèlement à l'axe longitudinal (L) du boîtier (1), les rainures (59, 61) étant disposées alternativement sur un côté intérieur de la paroi et sur un côté extérieur de la paroi.
